(19) **Europäisches Patentamt**
**European Patent Office**
**Office européen des brevets**

(11) **EP 1 525 857 B1**

(12) **EUROPEAN PATENT SPECIFICATION**

(45) Date of publication and mention
of the grant of the patent:
**21.02.2007 Bulletin 2007/08**

(51) Int Cl.:
***A61C 19/06*** *(2006.01)*

(21) Application number: **04256554.9**

(22) Date of filing: **22.10.2004**

(54) **Device for treating teeth and/or oral mucosal tissue**

**Vorrichtung zum Behandeln von Zähnen und/oder von Schleimhautgewebe**

**Dispositif de traitement des dents et/ou des tissus muqueux**

(84) Designated Contracting States:
**DE GB**

(30) Priority: **23.10.2003 US 692095**

(43) Date of publication of application:
**27.04.2005 Bulletin 2005/17**

(73) Proprietor: **McNEILL-PPC, INC.**
**Skillman, NJ 08558 (US)**

(72) Inventors:
• **Tessarotto, Luiz Arthur Bonaci**
**Plainsboro, NJ 08536 (US)**

• **Ying, Sun**
**Belle Mead, NJ 08502 (US)**
• **Mackay, Bruce J.**
**Skillman, NJ 08858 (US)**

(74) Representative: **Mercer, Christopher Paul et al**
**Carpmaels & Ransford,**
**43-45 Bloomsbury Square**
**London WC1A 2RA (GB)**

(56) References cited:
**US-A1- 2001 012 608      US-A1- 2001 038 997**
**US-A1- 2003 104 341**

EP 1 525 857 B1

## Description

### FIELD OF THE INVENTION

The present application relates to a device for treating teeth and/or for treating oral mucosal tissue.

### BACKGROUND OF THE INVENTION

The desire for whiter teeth has lead to development of treatment systems that a consumer may perform outside of the dentist office.

A popular whitening method involves wearing a dental tray or splint provided with a composition that chemically whitens teeth upon wearing the tray or splint. Conventionally, a consumer or dental patient is usually provided with a custom-fitted dental tray having selectively enlarged tooth treating compartments which are adapted to receive a whitening composition. The dental tray, with its whitening composition, is unobtrusively and advantageously worn by the patient for several hours or at night, perhaps while the patient sleeps. This treatment is repeated for a sufficient period of time to effect the tooth bleaching and whitening process. Whitening compositions used with the method may include peroxides, including carbamide peroxide (urea peroxide) and hydrogen peroxide. See for example, U.S. Pat. Nos. 5,290,566; 5,098,303; 5,165,424; 5,234,342; 5,376,006; 5,409,631 and 5,718,886. The whitening composition may be in the form of a solution, gel, paste or any other form that allows the whitening composition to contact the teeth. Drawbacks to these chemical whitening methods can be many. For example, care must be taken not to expose the gingival margins to the chemical compositions. Another drawback is that the dental tray may be uncomfortable and awkward to wear. Additionally, the whitening composition may need to be periodically replaced and the tray may need to be worn for extended periods of time.

Another popular method to whiten teeth involves the wearing of a thin strip of material having the whitening agent disposed on the strip. U.S. Patent No. 5,879,691 and Patent Application 2002/0006387 disclose a method for whitening teeth which includes the steps of providing a strip of material and applying a thin layer of a tooth whitening substance having a whitening active selected from the group consisting of peroxides, metal chlorites, perborates, percarbonates, peroxyacids, hypochlorites, and combinations thereof to a front surface of a plurality of teeth. The strips are inconspicuous and may be worn at any time.

Teeth may also be whitened by electrochemically generating oxidizing agents. For example, U.S. Pat. Nos. 5,921,251 and 6,135,126 disclose a toothbrush for supplying an oxidizing agent for topical treatment of an oral surface. The toothbrush has an oxidizing agent generator incorporated within the toothbrush stem for supplying an oxidizing agent to the bristles for application to the oral surface. The oxidizing agent generator electrochemically generates oxygen, hydrogen peroxide, ozone, or mixtures thereof. The brush may also include a vent or port for venting undesired fluids (e.g., hydrogen gas). These inventions, however, suffer from the limitation that only a few teeth can be brushed/treated at a given time, and consequently, the total time needed to treat the whole set of teeth may be quite long. In addition, the widespread use of oxidizing agents in the oral cavity through the brushing action may cause oral mucosal irritation.

Another example of a tooth bleaching method is disclosed in Japanese Patent Application No. 05164633 (JP05164633), the disclosure of which is hereby incorporated by reference. In the disclosed method, the surface of a tooth is bleached by applying electrolytically oxidized water as a bleaching agent to the tooth as it is or in form of a paste. The electrolytically oxidized water is produced by applying an electric voltage to water. The whitening treatment is carried out after cleaning of the tooth, moisture-proofing of the gingiva, and etching, water-washing and drying of the tooth. The bleached tooth is thereafter subjected to heating, removal of the bleaching agent and the moisture-proofing agent, washing and polishing. When the electrolytically oxidized water is used in the form impregnated in a water-absorbing material, the water is retained on the tooth surface over a long period to improve the bleaching efficiency. This method appears to involve several steps and may be too complicated and cumbersome to be used, especially by individual consumers at home.

Another method of whitening teeth involves the application of heat and peroxide-type whitening agents previously disclosed above. It is widely known in the art that heat activates peroxide solutions, increasing their effectiveness as whitening agents and shortening the required time to achieve whitening. Such methods are disclosed in U.S. Pat. Nos. 6,340,301 ("The '301 patent") and 6,422,868 ("The '868 patent"). The '301 patent discloses a dental device having a splint, a heating element attached to the splint, and means for increasing the temperature of the heating element. An active whitening agent is placed in the splint. The '868 patent discloses heating a specially-prepared patient dentition impression to a temperature in the range of approximately from 110° F to 130° F, coating the impression surfaces corresponding to the surfaces of the teeth to be whitened with a tooth whitening agent, properly placing the heated and coated patient dentition impression in the patient's mouth, and retaining the so-placed patient dentition impression in position at least for a total period of time in the range of approximately 5 to 20 minutes. The procedure can be adapted to microwave heating, electrical resistance heating and hot fluid heating of the patient dentition impression. Both patented methods involve regulating of the temperature so as not to cause the user discomfort.

**SUMMARY OF THE INVENTION**

In accordance with one aspect of the present invention, there is provided an oral device for cleaning teeth and placement on the teeth, said device comprising a substrate material, a power source having a positive terminal and a negative terminal, a first electrode and a second electrode and wherein said first electrode and said second electrode are secured to said substrate material and said first electrode is connected to said positive terminal of said power source and said second electrode is connected to said negative terminal of said power source.

In accordance with another aspect of the present invention, there is provided an oral device for for cleaning teeth and placement on the teeth, said device having at least one positive electrode; at least one negative electrode not in contact with the positive electrode; a power source; and means for holding an electrically conductive medium in contact with the teeth and both electrodes, wherein the power source is operatively connected to the electrodes.

The present invention allows the use of a reduced concentration of a peroxide compound as the whitening agent without compromising the performance of that whitening agent. While the use of high concentrations of peroxide compounds has been shown to produce improved whitening results, such high concentrations of peroxide compounds have been known to produce side effects such as, for example, tooth sensitivity. The present invention uses lower levels of peroxide compounds, thus reducing undesirable side effects while still maintaining good whitening results.

The present invention also allows the use of a tooth whitening composition which contains no peroxide compounds prior to application to the teeth. The tooth whitening composition without any peroxide compounds (but with water and an electrolyte therein) is loaded into, for instance, the trough of a dental tray and the tray is placed in the mouth to bring the whitening compositions into contact with the teeth to be treated. An electric current is then applied to the whitening composition thereby electrolytically generating one or more oxidizing species depending on the electrolyte and other components included in the composition. The one or more oxidizing species serve to whiten the teeth and eliminate harmful bacteria in the regions thereof.

**BRIEF OF THE DRAWINGS**

The present invention will be more clearly understood by reference to the appended drawings in which:

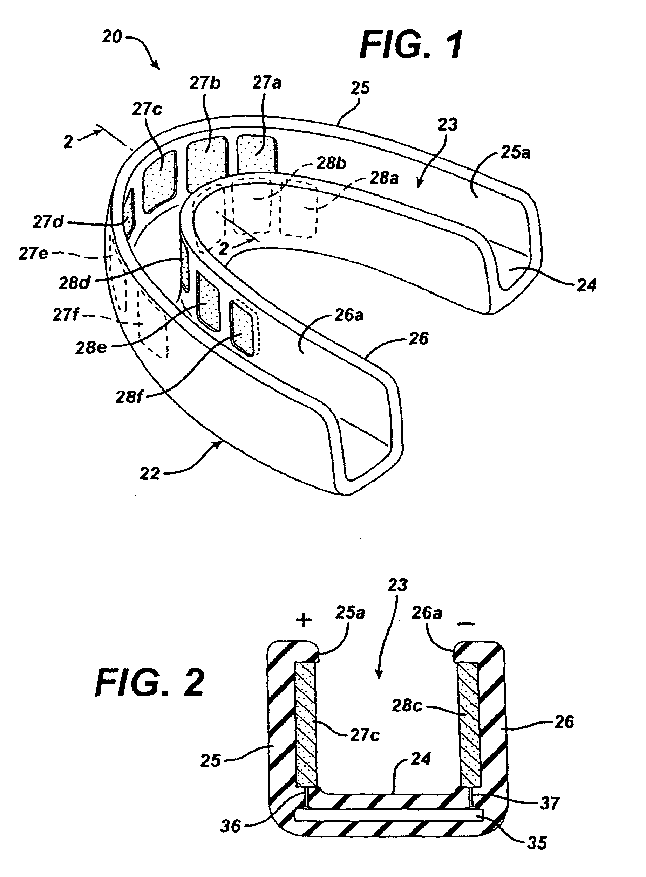

FIG. 1 is a perspective view of one embodiment of an oral device for treating teeth in accordance with the teachings of the invention;

2 is a cross-sectional view taken along line 2-2 of FIG. 1;

FIG. 3 is a top plan view of the device of FIG. 1;

FIG. 4 is an enlarged perspective view showing a DC power source connected to an electrode pair comprising the device of FIG. 1;

5 is a perspective view of a tooth whitening strip for use in the practice of the present invention;

FIG. 6 is a longitudinal cross-sectional view taken along line 6-6 of FIG. 5;

FIG. 7 shows a direct current (DC) power source for use in conjunction with the tooth whitening strip of FIG. 5, said power source and said whitening strip together constituting a system for whitening teeth;

FIG. 8A is a longitudinal cross-section taken along line 8A-8A of FIG. 7;

FIG. 8B is a longitudinal cross-section taken along line 8B-8B of FIG. 7;

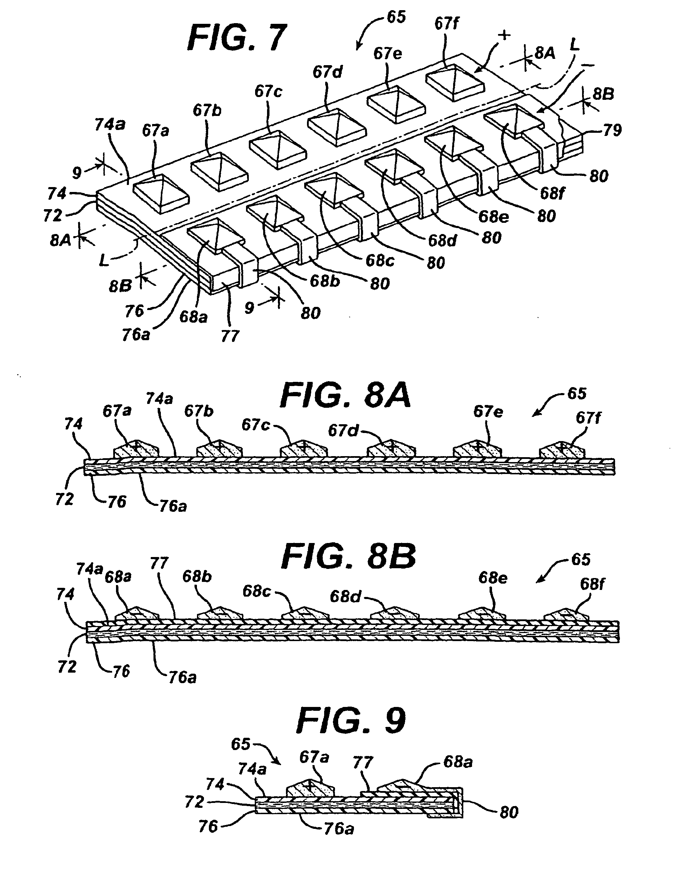

9 is a transverse cross-section taken along line 9-9 of FIG. 7;

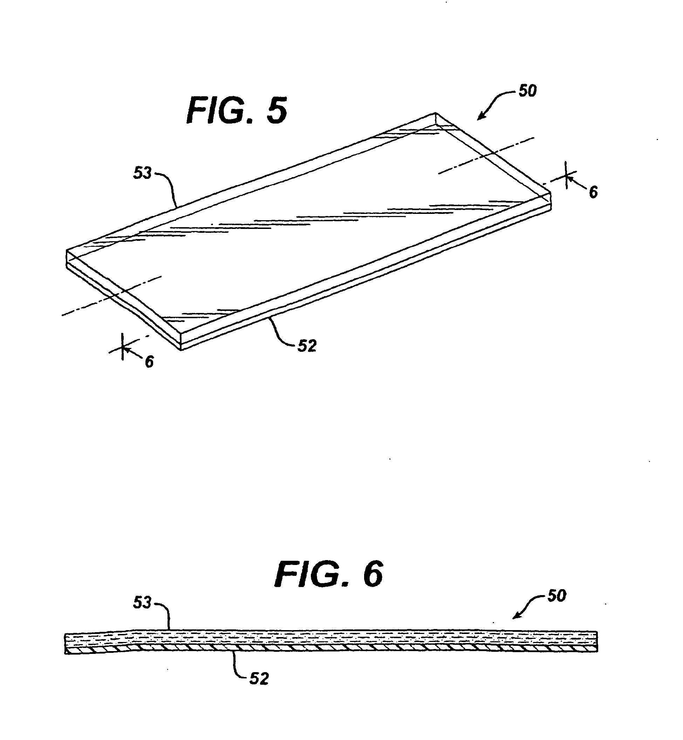

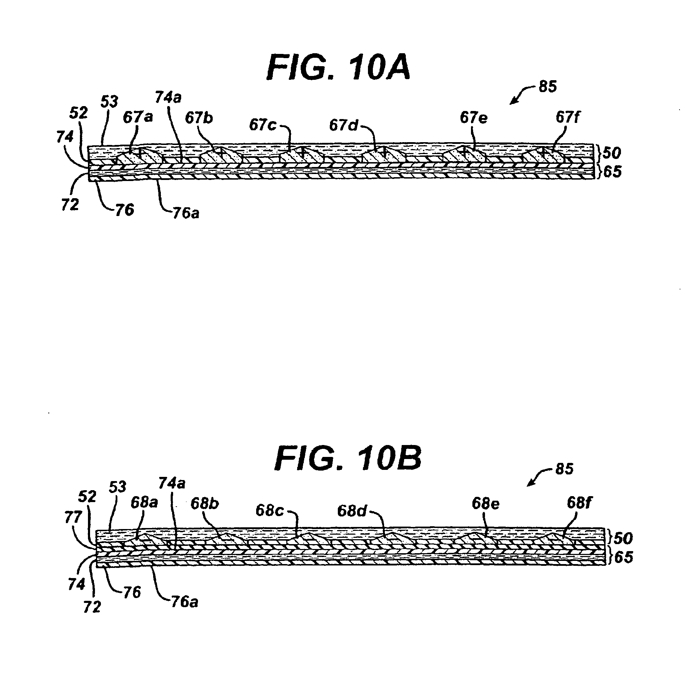

FIGS 10A and I 0B are a cross-sectional views showing the whitening strip of FIG. 5 in operative contact with the DC power source of FIG. 7;

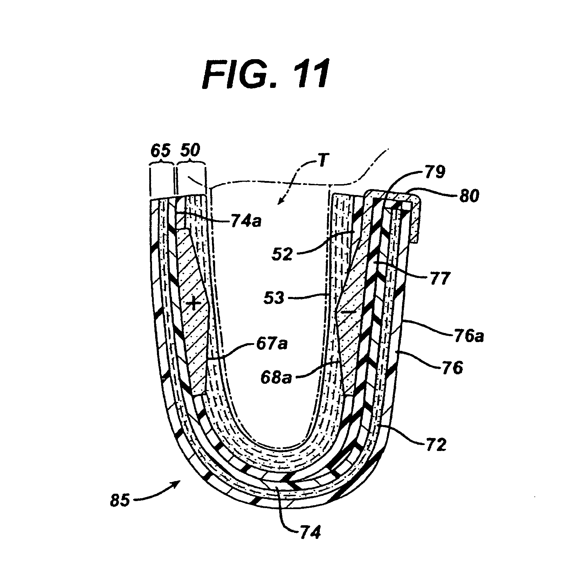

FIG. 11 is a cross-sectional view showing a single tooth in the process of being whitened in accordance with the teachings of the present invention;

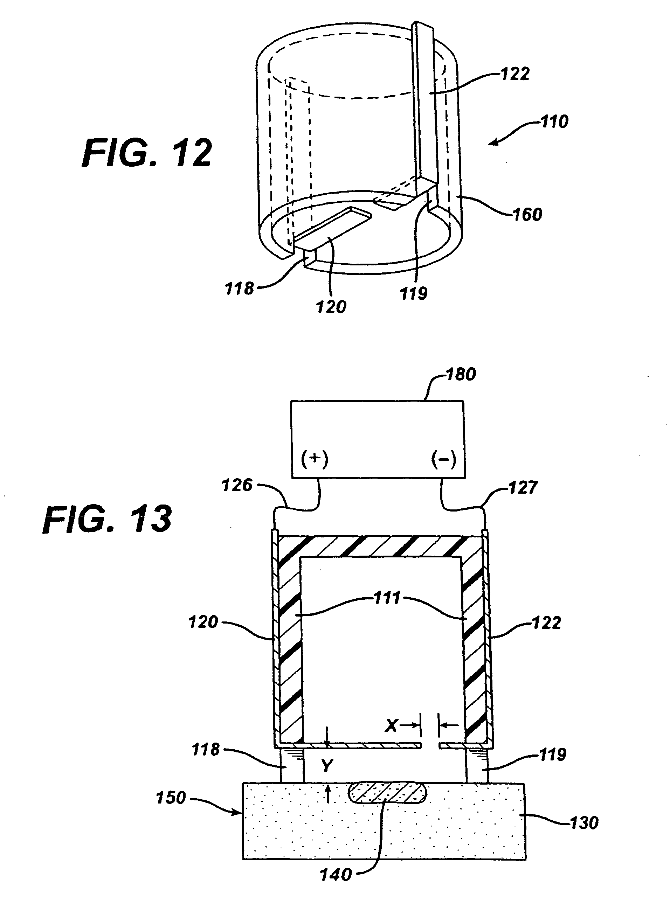

FIG. 12 illustrates a test cell; and

FIG. 13 is a view, partly in cross-section, illustrating a test rig including the test cell of FIG. 12.

## DETAILED DESCRIPTION OF THE INVENTION

The present invention provides an oral device and method for cleaning or otherwise treating teeth. The oral device may comprise, e.g., a generally U-shaped tray or a generally rectangular strip having at least one positive electrode and at least one negative electrode. Where the oral device is in the form of a U-shaped tray, the at least one positive electrode is placed in a front portion of the dental tray and the at least one negative electrode is placed in a back portion of the dental tray such that the two electrodes are physically separated and do not come into contact with one another. The dental tray comprises a trough defined by a floor portion and a pair of upwardly extending, spaced apart walls. In use, a composition having electrically conductive properties is placed in the trough of the tray and the tray is placed in the mouth of the user so that the conductive composition is brought into contact with the teeth to be treated and closes the electrical connection between the positive and negative electrodes. When electric energy is supplied to the electrodes in contact with the conductive composition, one or more oxidizing agents are generated and the teeth of the user are thereby whitened. Additionally, any such generated oxidizing agents eliminate harmful bacteria in the regions of the mouth adjacent the teeth.

As used herein, the term "oral device" includes the aforementioned U-shaped dental tray as well as a strip of material that is applied to surfaces of the teeth to be cleaned. The tray may be custom made, that is, made of impressionable material that conforms to the user's set of teeth and then retains the particular formed shape. The tray may also be a generic type, typically supplied from athletic or department stores and referred to as a mouth guard or night guard. The oral device, as will be explained in more detail hereinafter, includes a power source, negative and positive electrodes and conductive wires or leads connecting the power source to the electrodes.

As used herein, the term "conductive composition" means any composition that provides electrolytic conductivity and allows electrolysis to occur. The conductive composition may be, e.g. in form of a paste, liquid, foam, semi-solid, or the like.

As used herein, the term "cleaning" refers to either whitening or bleaching and the term "cleaning of the teeth" refers to whitening or bleaching of the surfaces of the teeth.

### Tooth Structure

A mammal tooth is chiefly composed of four main constituents namely the "cementum", the "dental pulp", the "dentin", and the "enamel".

The "cementum" is bonelike tissue forming the outer surface of the root of the tooth. The "dental pulp" consists of sensitive tissue containing arteries, veins, and lymphatic and nerve tissue. The "dentin" which surrounds the dental pulp forms the major part of the tooth. The dentin is dense bonelike calcareous tissue. On the outside of the tooth there is a hard porous layer composed of hydroxyapatite mineral crystals having a natural opaque white or off-white colour. This outer porous layer is called the "enamel".

### Tooth discoloration

Tooth discoloration can be caused by a variety of intrinsic and/or extrinsic influences. In general stains are divided into two main categories, extrinsic stains and intrinsic strains.

Extrinsic stains are mainly caused by the daily intake of substances, such as foods and beverages through the mouth, and/or the use of tobacco products etc. These substances tend to adhere to the enamel's hydoxyapatite structure and hereby discolor the teeth and/or reduce the whiteness of the teeth. Over a period of years extrinsic stains may penetrate the enamel layer and gradually give intrinsic discolorations.

Intrinsic stains is the term used for stains which have penetrated the tooth structure (i.e. discoloration within the tooth matrix). Such stains can arise as described above or be caused by agents including hematological agents and certain drugs, or be due to dental pulp necrosis or developmental abnormalities. For instance, degradation products from the body may cause discolorations. Excessive intake of tetracycline or fluoride during a long period of illness has been found to release degradation products into the dentinal tubules during the development of tooth enamel causing some degree of discoloration. The severity of such discoloration depends on the time and duration of intake of the medicine. Further, dental pulp necrosis entails Haemorrhagic discolorations and is a result of blood degradation. If the pulp necrosis is caused by e.g. caries degradation of proteins the tooth/teeth will become grayish-brown. In the case of traumatic pulp death the tooth will turn yellow- brown. It is believed that such a discoloration is caused by haemolysis of red blood cells entering the dentinal tubules.

Tooth Bleaching

Before conducting tooth bleaching it is important to assess the type of stain, as different types of stains need different approaches and/or bleaching agents. Certain extrinsic stains, which occur on the surface or subsurface of the teeth, can be removed by regular intense mechanical brushing of the teeth with cleansing agents containing abrasives and surfactants. However, not all extrinsic stains can be removed this way and require bleaching agents which inhibit non-enzymatic browning reactions. Intrinsic stains are located in the tooth matrix and cannot be removed or prevented by intense mechanical brushing of the teeth. Removal of such discolorations requires bleaching agents capable of penetrating into the teeth structure. Hydrogen peroxide is an example of such an agent, which can be used for both extrinsic and intrinsic stains.

Hydrogen peroxide can be used for many types of stains e.g. stains residing in the dentin, such as stains caused by tetracycline. Even though hydrochloric acid is not regarded as being a bleaching agent it is known to be capable of removing stains caused by fluorosis, as it dissolves the surface of the teeth. However, the use of such agents can inflict severe tooth damage or at least irritation in the oral cavity. Consequently, such agents are for safety reasons not suitable for "home-use" by the private consumer and should only be used cautiously by professionals.

Bleaching techniques

Bleaching techniques are usually divided into two main categories: non-vital bleaching techniques, and vital bleaching techniques. The non-vital techniques give the most effective results but also have the greatest potential hazard. One non-vital bleaching technique uses sodium perborate and 35% hydrogen peroxide as the active ingredient. Products sold for vital bleaching techniques can be divided into three main groups: "in-office" bleaching products; dentist prescribed, home applied bleaching products; and over-the-counter bleaching kits. One of the most commonly used "in-office"-techniques combines the use 30% hydrogen peroxide with heat and light treatment to speed up the oxidation reaction (i.e. the removal of stains).

Another method, using a "dentist prescribed, home-applied" bleaching product, involves the use of 10% urea peroxide (carbamide peroxide). The teeth are bleached in a mouth tray containing the bleaching agent, placed upon the teeth of the patient. Over-the-counter kits which can be used for bleaching teeth include products such as toothpastes and mouth washes having from 3% to 6% hydrogen peroxide and which are sold directly to the consumer, without prescription by a dentist.

Referring now to FIGS. 1-4 of the accompanying drawings, oral dental device 20 is shown in the form of a U-shaped tray 22. Tray 22 comprises a floor portion 24 the sides of which are joined to a pair of upstanding, spaced apart walls 25, 26 so as to form a trough 23. The inwardly facing surface 25a of front wall 25 carries a first plurality of electrodes, six in number, and identified in FIG. 1 by numerals 27a, 27b, 27c, 27d, 27e and 27f. The area of each of electrodes 27a-27f ranges from about 40 mm$^2$ to about 100 mm$^2$, preferably from about 65 mm$^2$ to about 91mm$^2$. More preferably, the area of each of the electrodes ranges from about 70 mm$^2$ to about 82 mm$^2$. The inwardly facing surface 26a of back wall 26 comprises a second plurality of electrodes, also six in number, and identified in FIG.1 by numerals 28a, 28b, 28c, 28d, 28e and 28f. The area of each of the electrodes 28a-28f is not critical. Typically, the area of each of electrodes 28a-28f may range from 40mm$^2$ to about 100mm$^2$. The electrodes are inert and are electrically conductive. The electrodes may be made of gold-plated copper, platinum-coated copper, stainless steel, graphite or the like materials. It will be understood that each electrode, e.g. electrode 27b, carried by front wall 25 has a "mating" electrode, in this case electrode 28b, carried in back wall 26. The outer surfaces of the all the electrodes are preferably recessed from the surfaces of the walls in which they are carried (See especially FIG. 2). The amount of the recess ranges from about 0.01mm to about 5mm, preferably from about 0.2mm to about 1mm. Our investigations indicate that, in order to maximize the whitening effect, surfaces of the teeth to be treated should be as close to the positive electrodes as is reasonably possible, consistent with the need to provide sufficient space for the presence of the tooth whitening composition (discussed hereinafter) between the positive electrodes and outer surfaces of the teeth to be treated.

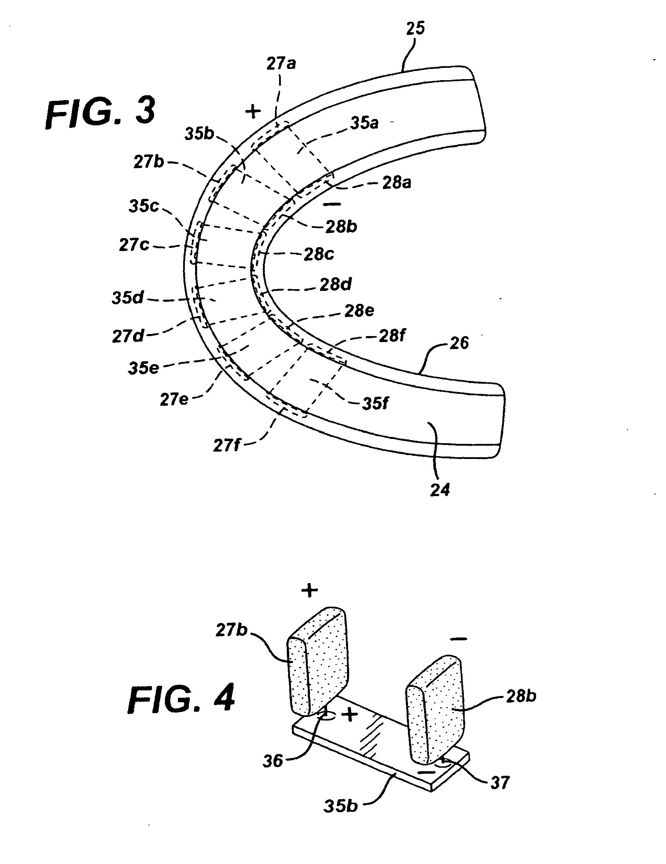

In the embodiment under discussion, and as can best be understood by reference to FIG. 3 and FIG. 4 of the drawings, each electrode pair, e.g. electrode 27b/electrode 28b, is connected to its own DC power source. By way of example, electrode pair 27b/28b is connected to power source 35b such that an electrical lead 36 (e.g., a thin conductive wire) from the positive terminal of power source 35b is connected to electrode 27b and an electrical lead 37 from the negative terminal of power source 35b is connected to electrode 28b.

Individual power sources 35a-35f, seen in phantom in FIG. 3, are embedded in floor 24 of device 20 as can be seen in FIG. 2 of the drawings. Also as seen in FIG. 2, electrical leads 36, 37 pass through the regions where floor 24 joins sidewall 25 and sidewall 26, respectively, where they are connected to positive electrode 27c and negative electrode 28c. If desired, power sources 35a-35f could be located in a U-shaped compartment located adjacent the lower surface of floor 24. In such case, electrical leads 36, 37 would have to pass through floor 24 and/or walls 25/26 to reach electrodes 27a-27f and 28a-28f.

The oral dental device of FIGS. 1-4 can be used to whiten the upper teeth in the following manner. A tooth whitening composition is placed into trough 23 of oral dental device 20. As will be seen hereinafter, a suitable tooth whitening composition (in gel form) comprises water, a polymeric thickener, and about 0.9% by weight of the composition of sodium chloride. This composition is electrically conductive by virtue of the presence therein of sodium chloride. Dental device 20 loaded with the whitening composition is then inserted into the mouth so that the upper teeth to be cleaned extend into trough 23. It will be noted that when dental device 20 is in place, the first plurality of electrodes, 27a-27f, are positioned adjacent the outer surfaces of the user's six front teeth, i.e., the first three teeth on the upper left side of the mouth and the first three teeth on the upper right side of the mouth. When the aforementioned thickened, electrically conductive tooth whitening composition is placed into trough 23 and comes into contact with positive electrodes 27a-27f and negative electrodes 28a-28f, an electric circuit is established between each positive electrode/negative electrode pair and its associated power source. The resulting flow of electric current electrolytically decomposes the water in the composition. Some of the products of the decomposition of the water then react with chloride ion to produce oxidizing species, for example, hypochlorite ion. The various oxidizing species so produced serve to whiten the teeth.

It will be understood that oral device 20 may be provided with as many positive electrodes (and "mating" negative electrodes) as may be desired. Preferably oral device 20 comprises a positive electrode (and a "mating" negative electrode) for each tooth which is to be treated. Both the positive and negative electrodes must contact the conductive composition in order for electrolytic decomposition to occur.

It will be understand that any dental tray known in the art may be used with the present invention. In particular, any of the custom trays disclosed by Munro (U.S. Pat. No. RE 34,196), Darnell (U.S. Pat. No. 4, 968,251) and Darnell (U.S. Pat. No. 5,575,655) may be utilized in the practice of the present invention. While a custom made tray may provide a better fit and a better impression of the tooth shape and therefore more comfort, generic-type or over the counter trays such as those sold in sports shops also may be used.

The tray may be made from any polymeric material known in the art. Examples of suitable materials include ethylene-vinyl acetate copolymers, acrylonitrile/butadiene/styrene terpolymers, polypropylene, polyesters such as polyethylene terephthalates, polyamides, polycarbonates and polystyrenes.

Tray 20 may be trimmed such that the gum or gingival surfaces are not exposed to the electrodes therein. As is known in the prior art, the tray 20 should not overlie gingival tissue, i.e. no tray material should touch the gingivae at the neck areas of the teeth when the tray is in use with the peroxide agent/solutions, so as to reduce possible injury or irritation to the gingival tissue.

Referring now to FIGS. 5 and 6, there is shown a tooth whitening strip 50 for use in whitening teeth. As illustrated, tooth whitening strip 50 comprises a support element 52 and a tooth whitening composition 53 coated thereon. Suitable tooth whitening strips are known in the art and include, e.g., the tooth whitening strips disclosed in U.S. Patent 5,891,453, U.S. Patent 5,879,691 and U.S. Patent 6,277,458. The tooth whitening agent in the tooth whitening composition 53 may be a peroxide compound including, but not limited to, hydrogen peroxide, calcium peroxide and carbamide peroxide. Alternatively, in accordance with one aspect of the invention, the tooth whitening agent may be a substance which can undergo electrolytic decomposition to thereby produce a chemical moiety which can bleach or whiten teeth. Support material 52 may be made from, e.g., thin polymeric films (e.g., a polyethylene film), paper, woven or non-woven fabrics and foam materials. It will be understood that tooth whitening strip 50 need not necessarily have the two-layer structure shown in FIGS. 5 and 6. Alternatively, tooth whitening strip 50 may comprise a carrier layer, e.g., a nonwoven fabric or foam, which has been impregnated with a tooth whitening composition.

FIGS. 7, 8A, 8B and 9 show a direct current (DC) power source 65 for use in the practice of the present invention. DC power source is a flexible thin layer open electrochemical cell (sometimes referred to as a "paper" battery) of the type disclosed generally in U.S. Patents 5,652,043, U.S. Patent 5,811,204 and U.S. Patent 5,897,522. DC power source 65 is generally rectangular in configuration and has a longitudinal axis L-L. Power source 65 comprises a plurality of positive terminals 67a, 67b, 67c, 67d, 67e and 67f on one side of longitudinal axis L-L and a plurality of negative terminals 68a, 68b, 68c, 68d, 68e and 68f on the other side of longitudinal axis L-L.

As can be seen most readily in FIGS. 8A, 8B and 9, power source 65 comprises a first layer 76 comprising an insoluble negative pole, a second layer 72 comprising an electrolyte, and a third layer 74 comprising an insoluble positive pole. Layers 72, 74, 76 of power source 65 correspond to layers 12, 14, and 16, respectively, shown in FIG. 1 of U.S. 5, 811,204 and may be made and arranged as disclosed in the various examples, e.g., Example 1, set forth in that patent. Certain other structural features of power source 65 disclosed herein are not, however, disclosed by U.S. 5,811,204. As will be seen by reference to FIGS. 7 and 8A of the appended drawings, terminals 67a-67f are in contact with the upper surface 74a of layer 74 on a first side of longitudinal axis L-L. Terminals 67a-67f are rendered positive terminals due to the fact they are in contact with layer 74 which comprises an insoluble positive pole. As can be seen by reference to FIGS. 7, 8B and 9, an insulating material 77 is secured to and covers upper surface of layer 74 between longitudinal axis L-L and the lateral edge 79 of power source 65 which is furthest from terminals 67a-67f. As seen in FIG. 7 and FIG. 9, insulating material 77 is folded over said lateral edge and extends downwardly so as to cover and electrically insulate the longitudinal side edges of layer 72 and layer 74.

As seen in FIG. 7 and FIG. 8B, terminals 68a-68f are secured to the upper surface of insulating material 77 on a second side of longitudinal axis L.L. Thus, terminals 67a-67f are disposed on one side of longitudinal axis L-L, while terminals 68a-67f are located in the other side of that axis.

Still referring to FIG. 7, and also to FIG. 9, it will be seen that electrodes 68a-68f each have extensions 80 which extend downwardly over the lateral edge 79 of the power source to overlie the downwardly folded portions of insulating material 77 adjacent the longitudinal side edges of layers 72 and 74. The ends of the individual extensions are secured in electrical contact with the bottom surface 76a of layer 76 (see especially FIG. 9, right hand side). Terminals 68a-68f, which are insulated from contact with layers 72, 74, are thus rendered negative terminals by virtue of the fact they are in contact with layer 76 which comprises an insoluble negative pole.

The present invention also contemplates the provision of a kit for use in whitening teeth. The components of the kit can be assembled by the end user to provide a tooth whitening system. One component of the kit comprises a tooth whitening strip wrapped in its own individual wrapper which can be made from any suitable packaging material. The other component of the kit is a DC power source, e.g., the one shown in FIG. 7. The two components, i.e., the wrapped tooth whitening strip and the DC power source constitute the kit. The two components can be packaged in a container, e.g., a small cardboard box or a sealed plastic bag for sale. Alternatively, the DC power source could be wrapped and the wrapped tooth whitening strip and the wrapped power source could be adhered, for example, by a hot melt adhesive, one to the other.

The tooth whitening strip shown in FIG. 5 and the DC power source shown in FIG. 7 can be assembled by the end user to provide a tooth whitening system for use in whitening the teeth. Tooth whitening system 85, which is shown in cross section in FIGS. 10A and 10B, is formed by placing tooth whitening strip 50 (FIG. 5) on top of DC power source 65 (FIG. 7) and pressing the strip and power source into contact with one another. It is critical in bringing the strip into contact with the power source that the terminals 67a-67f and 68a-68f penetrate the support element 52 of the tooth whitening strip so as to bring all the terminals of the power source into contact with the conductive tooth whitening composition 53. In use, the so formed tooth whitening system is folded in half along its longitudinal axis so that conductive tooth whitening composition faces inwardly. The folded tooth whitening system is then placed over the teeth to be treated so that that portion of the conductive tooth whitening composition in contact with positive terminals 67a-67f come into contact with the outer surfaces of the teeth to be treated and that portion of the conductive tooth whitening composition which is in contact with negative terminals 68a-68f come into contact with the inner surfaces of the teeth. If desired, a small clip may be used to maintain contact between the folded whitening system and the teeth during use.

The conductive composition comprises an electrolyte so as to provide the composition with the ability to conduct ions. The conductive composition of the present invention may be a liquid (e.g., a solution, a suspension, or an emulsion), a semi-solid (e.g., a gel, a cream, a lotion, microemulsion, or hydrogel), or a solid combined with a liquid, that during use is capable of conducting electricity. Typically, the conductive composition will comprise one or more electrolytes and water.

Examples of electrolytes include, but are not limited to, inorganic and organic salts and buffers. Examples of salts include, but are not limited to, chloride salts (such as sodium chloride, potassium chloride, lithium chloride, calcium chloride, strontium chloride, magnesium chloride or other chloride salts), as well as salts of sodium, potassium, lithium, calcium, magnesium, strontium, fluoride, iodide, bromide. Examples of buffers include, but are not limited to, phosphates, citrates, acetates, lactates, and borates.

In one embodiment, the electrolyte is an active agent, or becomes an active agent after the passage of the electric current through the conductive composition. Examples of such electrolyte-active agents include, but are not limited to, salicylic acid, salicylates, and other weak acid or weak base active agents. In one embodiment, the carrier contains water. In a further embodiment, the conductive composition may also contain one or more organic solvents safe for oral use. Examples of organic solvents include, but are not limited to: surfactants of cationic, anionic and nonionic nature; vegetable oils; mineral oils; waxes; gums; synthetic and natural gelling agents; alkanols; glycerol, glycols; and polyols.

One embodiment of a conductive composition which can be used in the practice of the invention comprises 0.9% by weight of the composition of NaCl. In another embodiment, sodium chloride is added to a whitening composition containing a peroxide to form an enhanced conductive composition.

The conductive compositions may also comprise active agents for treatment of the teeth, gums, or oral mucosa. Alternatively, active agents may be electrochemically generated from pre-cursor materials present in the conductive composition.

The conductive composition may also contain: preservatives (such as cresol, chlorocresol, benzyl alcohol, methyl p-hydroxylbenzoate, propyl p-hydroxybenzoate, phenol, benzalkonium chloride, and benzethonium chloride); stabilizing agents or antioxidants (such as ascorbic acid, ascorbic acid esters, butylhydroxy anisole, butylhydroxy toluene, cysteine, N-acetylcysteine, sodium bisulfite, sodium metabisulfite, sodium formaldehydesulfoxylate, acetone sodium bisulfite, tocopherols, and nordihydroguaiaretic acid); chelating agents (such as ethylenediaminetetraacetic acid and its salts); buffers (such as acetic acid, citric acid, phosphoric acid, glutamic acid, and salts thereof); and tonicity adjusting agents (such as sodium chloride, sodium sulfate, dextrose and glycerin).

Examples of the electrochemically reactive materials in the conductive composition according to the present invention include, but are not limited to, water and compounds containing the elements selected from the Periodic Table of the Elements VIB and VIIB (such as oxygen, sulfur, fluorine, chlorine, bromine, and iodine).

In one embodiment, a reactive material reacts at the inert anode to form an oxidizing agent. Examples of oxidizing agents which are so formed include, but are not limited to, HOBr, HOI, HOCl, $OBR^-$, $OI^-$, $OCl^-$. The present device thus enables generation of oxidizing agents, such as nascent oxygen $O_2$, $O^-$, $O_3^-$, which are difficult to formulate in a conventional topical product.

In one embodiment, the reactive material reacts with the inert cathode to form a reducing agent. Examples of such a reactive material includes, but is not limited to, oxidized or disulfide forms of thio-compounds with one or more sulfhydryl functional groups, thio-containing amino acids and their salts or esters, and sulfides. Examples of such thio-compounds include, but are not limited to: thioglycolic acid and its salts, such as thioglycolates of calcium, sodium, strontium, potassium, ammonium, lithium, magnesium, and other metal salts; thioethylene glycol; thioglycerol; thioethanol; thioactic acid; and thiosalicylic acid; and their salts. Examples of the thio-containing amino acids include, but are not limited to, L-cysteine, D-cysteine, DL-cysteine, N-acetyl-L- cysteine, DL-homocysteine, L-cysteine methyl ester, L-cysteine ethyl ester, N- carbamoyl cysteine, glutathione, and cysteamine. Examples of sulfides include, but are not limited to, calcium, sodium, potassium, lithium and strontium sulfides and glutathione disulfide. The inert cathode converts the aforementioned reactive oxidized or disulfide form of a sulfur-containing compound to a thio-containing compound, or a sulfydryl-containing compound.

Examples of such a conversion are the conversion of cystine to cysteine and the conversion of the oxidized form of glutathione to glutathione.

In one embodiment, the concentration of the reactive material in the conductive composition ranges from about 0.01% to about 25%, by weight, such as from about 0.1% to about 10%, by weight, of the carrier. The pH value of the carrier may range from about pH 1.5 to about pH 9, preferably from pH 2 to pH 7, and most preferably from about pH 3 to pH 5.

In one embodiment, the conductive composition contains at least one active agent such as benzoyl peroxide; resorcinol; sulfur; sulfacetamide; urea; antibiotics such as tetracycline, metronidazole, and erythromycin; anti-inflammatory agents such as corticosteroids (e.g., hydrocortisone), ibuprofen, naproxen, and hetprofen; and imidazoles such as ketoconazole and elubiol; and salts, esters, and other derivatives thereof. Other examples of active agents include essential oils, alpha-bisabolol, dipotassium glycyrrhizinate, camphor, β-glucan, allantoin, feverfew, flavonoids such as soy isoflavones, saw palmetto, chelating agents such as EDTA, lipase inhibitors such as silver and copper ions, hydrolyzed vegetable proteins, inorganic ions of chloride, iodide, fluoride, and their nonionic derivatives chlorine, iodine, fluorine, and other valences, synthetic phospholipids and natural phospholipids such as Arlasilk™ phospholipids CDM, SV, EFA, PLN, and GLA (Uniqema, ICI Group of Companies, Wilton, UK).

In one embodiment, the conductive composition contains metals such as metal ions or fine powders. Examples of such metals include, but are not limited to, gold, silver, copper, zinc.

Other active agents include those commonly used as for treatment of mucosal injuries and conditions, such as topical antibiotics for wounds and topical antifungal drugs.

Examples of antifungal drugs include but are not limited to miconazole, econazole, ketoconazole, sertaconazole, itraconazole, fluconazole , voriconazole, clioquinol, bifoconazole, terconazole, butoconazole, tioconazole, oxiconazole, sulconazole, saperconazole, clotrimazole, undecylenic acid, haloprogin, butenafine, tolnaftate, nystatin, ciclopirox olamine, terbinafine, amorolfine, naftifine, elubiol, griseofulvin, and their pharmaceutically acceptable salts. In one embodiment, the antifungal drugs are an azole, an allylamine, or a mixture thereof.

Examples of antibiotics (or antiseptics) include but are not limited to mupirocin, neomycin sulfate bacitracin, polymyxin B, 1-ofloxacin, tetracyclines (chlortetracycline hydrochloride, oxytetracycline - 10 hydrochloride and tetrachcycline hydrochoride), clindamycin phsphate, gentamicin sulfate, metronidazole, hexylresorcinol, methylbenzethonium chloride, phenol, quaternary ammonium compounds, tea tree oil, and their pharmaceutically acceptable salts.

Examples of antimicrobials include but are not limited to salts of chlorhexidine, such as iodopropynyl butylcarbamate, diazolidinyl urea, chlorhexidene digluconate, chlorhexidene acetate, chlorhexidene isethionate, and chlorhexidene hydrochloride. Other cationic antimicrobials may also be used, such as benzalkonium chloride, benzethonium chloride, triclocarbon, polyhexamethylene biguanide, cetylpyridium chloride, methyl and benzothonium chloride. Other antimicrobials include, but are not limited to: halogenated phenolic compounds, such as 2,4,4',-trichloro-2- hydroxy diphenyl ether (Triclosan); parachlorometa xylenol (PCMX); and short chain alcohols, such as ethanol, propanol, and the like. In one embodiment, the alcohol is preferably at a low concentration (e.g., less than about 10% by weight of the carrier, such as less than 5% by weight of the carrier) so that it does not cause undue drying of the mucosal tissue.

Examples of anti-inflammatory agents, include, but are not limited to, suitable steroidal anti-inflammatory agents such as corticosteroids such as hydrocortisone, hydroxyltriamcinolone alphamethyl dexamethasone, dexamethasone-phosphate, beclomethasone dipropionate, clobetasol valerate, desonide, desoxymethasone, desoxycorticosterone acetate, dexamethasone, dichlorisone, diflorasone diacetate, diflucortolone valerate, fluadrenolone, fluclarolone acetonide, fludrocortisone, flumethasone pivalate, fluosinolone acetonide, fluocinonide, flucortine butylester, fluocortolone, fluprednidene (fluprednylidene)acetate, flurandrenolone, halcinonide, hydrocortisone acetate, hydrocortisone butyrate, methylprednisolone, triamcinolone acetonide, cortisone, cortodoxone, flucetonide, fludrocortisone, difluorosone diacetate, fluadrenalone acetonide, medrysone, amciafel, amcinafide, betamethasone and the balance of its esters, chlorprednisone, chlorprednisone acetate, clocortelone, clescinolone, dichlorisone, difluprednate, flucloronide, flunisolide, fluoromethalone, fluperolone, fluprednisolone, hydrocortisone valerate, hydrocortisone cyclopentylproprionate, hydrocortamate, meprednisone, paramethasone, prednisolone, prednisone, beclomethasone dipropionate, betamethasone dipropionate, and triamcinolone. The preferred steroidal anti-inflammatory for use in the present invention is hydrocortisone. A second class of anti-inflammatory agents which is useful in the compositions of the present invention includes the nonsteroidal anti-inflammatory agents.

Other active agents include, but are not limited to, wound healing enhancing agents, scar reducing agents, analgesic agents, anesthetics, antihypertensives, drugs to treat coronary artery diseases, anticancer agents, endocrine and metabolic medication, neurologic medications, medication for cessation of chemical addictions, motion sickness, and protein and peptide drugs.

The amount of the active agent in the conductive composition will depend on the active agent and/or the intended use of the device. In one embodiment, the conductive composition contains a safe and effective amount of the active agent, for example, from about 0.001 percent to about 20 percent by weight, such as from about 0.01 percent to about 5 percent, by weight, of the carrier.

Power source 65 may be any power source that is in communication with the electrodes and that can provide sufficient energy to enable electrolysis of the conductive composition. The power source may be, but is not limited to, a primary cell, a secondary cell, conventional direct current (DC) or pulsed DC. Pulsing the power means applying power to the electrodes of the device at certain time intervals. The advantage of this electrical mode is that more current density can be withdrawn from the battery, a more compact battery size can be used, and the battery's life can be prolonged. The polarity between the electrodes can be reversed as well. Direct current sources such as portable batteries including but not limited to primary cells or secondary cells such as, A, AA, C, D-cell batteries, camera batteries, hearing devices, thin or thick film batteries and fuel-cells may be used. In one embodiment, the power source is a battery (e.g., a rechargeable or disposable battery). In one embodiment, the battery is a disposable battery of small size suitable for a wearable patch or facial mask type adhesive device. Examples of suitable batteries include, but are not limited to, button or coin batteries such as silver oxide, lithium, and zinc air batteries (which are typically used in small electronic devices). A zinc air battery is preferred because of its small size and high energy density, as well as its environmental friendliness. Examples of zinc air batteries include, but are not limited to, ENERGIZER™ AC5, CR391 and AC10/230 (Eveready Battery Co. Inc., St. Louis, MO). Another preferred battery for the device is a flexible thin layer open electrochemical cell, such as those disclosed in U.S. Patent No. 5,897,522. Power source 35 may be rechargeable or replaced after each treatment, depending on the size of the battery initially used and the length of treatment. The power source should be capable of delivering a current of 1 to 15 mA, which is a comfortable range for use in the mouth. In one embodiment, charged capacitors with low register attached may also be used. Additionally, the power supply may activate and inactivate the conductive wires for predetermined time intervals.

The conductive wire may be made from any electrically conductive material. For example, nichrome, copper or aluminum wires may be used.

The conductive electrodes of the present invention may be reactive conductive electrodes or inert conductive electrodes. The term "reactive conductive electrode" means that the conductive electrode itself goes through a change in its chemical composition during the electrode chemical reactions occurring with the electric current passing through the electrode during the process. In one embodiment, the reactive conductive electrode is made of reactive materials such as metal halides (e.g., silver-silver chloride (Ag/AgCl), silver-silver bromide, and silver-silver iodide). In this case, the primary electrochemical reaction at the cathode surface is conversion of solid silver halide to metallic silver with little unwanted consumption of the oxidizing agents generated by the anode. The released halide ions may be subsequently oxidized to oxidizing agents, such as chloride ions to chlorine ($Cl_2$), hypochlorous acid (HClO), and hypochlorite ions (ClO$^-$), and iodide ions to iodine.

The term "inert conductive electrode" means that the conductive electrode itself does not go through a change in its chemical composition. In one embodiment, the anode is made of an inert conductive electrode, so that the electrochemical process at the surface of the anode generates oxidizing agents such as nascent oxygen (e.g., by electrolysis of water) and/or chlorine-containing oxidizing agents such as chlorine, hypochlorite, chlorate and perchlorate, and chlorine dioxide. Nascent oxygen is an oxidizing agent. Chlorine-containing oxidizing agents are potent antimicrobial agent with bacteriacidal activity.

In one embodiment, the inert conductive electrode is made of DSA (Dimensional Stable Anode) or coated on the surface with an inert materials such as a noble metal (e.g., gold, platinum, titanium-platinum plated or gold-coated conductive metals), conductive carbon (e.g., glassy carbon or graphite), carbon-embedded polymers (e.g., carbon silicone rubbers), conductive carbon or graphite polymer foam or sponge, silver halide-coated silver (e.g., silver chloride-coated silver, silver bromide-coated silver, and silver iodide-coated silver), and corrosive resistant alloys.

The two conductive electrodes are in ionic communication with the conductive composition containing an electrolyte. The term "ionic communication" means that ions of one or more electrolytes in the conductive composition are in contact with the conductive electrode.

A switch may be provided that allows the user to turn the power source off and on. A timer may be provided that allows the power to be turned off and on at predetermined intervals.

FIG. 12 illustrates a test cell 110 and FIG. 13 shows test rig which includes test cell 110. Test cell 110 is substantially cylindrical in configuration and is made from an electrically insulating material, specifically a low density polyethylene. Test cell 110 has a generally cylindrical wall 160, a closed upper end 112 and an open lower end 114. Wall 160 has a pair of diametrically opposed rectangular openings 118 and 119. Test cell 110 further comprises a pair of electrodes 120, 122 made from platinum strips (3N5 purity, Lot number Q6814) purchased from ESPI, Oregon. The platinum strips were approximately 4 mm wide and 0.150 mm thick. Electrode 122 was 40 mm long. Electrode 120 was about 43mm long. The electrodes were secured opposite one another on the outside surface of test cell 110. As seen in FIGS. 12 and 13, the end portions of electrodes 120 and 122 are bent at a right angle and inserted through rectangular openings, 118 and 119, respectively. It will be noted that the bent portion of electrode 120 is longer than the corresponding bent portion of electrode 122. The tips of the two electrodes were separated by a distance of approximately 3.0 mm (shown as "X" in Figure 13). The distance from the lower surfaces of electrodes 120, 122 to the bottom of test cell 110 was approximately 0.2 mm as shown by the letter "Y" in Figure 13. A cow tooth slab 130 comprising a cow tooth chip 140 artificially stained and embedded in a block 150 of epoxy resin was acquired from Purdue University, IN (Dept of Health & Science Research). Cow tooth chip 140 was about 3mm long, 3mm wide and about 2mm thick. Resin block 150 had a length of approximately 15 mm, a width of 15 mm and a thickness of 6 mm. A direct current power supply 180, Phoresor II PM700, was purchased from Iomed, Utah, USA. Electrode 120 was connected by conductive wire 126 to the positive terminal of power supply 180 and electrode 122 was connected by conductive wire 127 to the negative terminal of power supply 180. The current supplied by power supply 180 can be varied from 0 to 8 mA.

A Minolta colorimeter CR-321 (Minolta Corporation, NJ) was used to read the L,a,b color intensity of the stained cow tooth before and after the experiments. The colorimeter provides readings for the lightness component, L; the "a" component (green-red axis); and the "b" component (blue-yellow axis) of the sample whose color intensity is being determined. The color value, ∆E, is then calculated using the following equation:

$$\Delta E \;=\; 0.23((L_f - L_i)^{\wedge}2 + (a_f - a_i)^{\wedge}2 \;+\; (b_f - b_i)^{\wedge}2)^{1/2}$$

where the subscript "f" indicates a final reading and the subscript "i" indicates an initial reading and 0.23 is a correction factor for using a cow's tooth instead of a human tooth.

The color value, ∆E, was converted to "tooth shades". This conversion was done by reading the L, a, and b values for each tooth on the widely used "tooth guide" reference system, i.e., Vitapan 3D-Master, (VitaZahnfabrik H. Rouetr GmbH&Co, Germany). A ∆E value of zero indicates that there was no variation in the "tooth shade". A tooth shade value of 12 corresponds to the difference between the darkest color and the lightest color in the tooth guide. A Fluke oscilloscope in the voltage mode was used to monitor the voltage across the terminals of the energy source. A Keithly 179 TRMS milliampermeter from Digital Multimeter, Ohio, was used to monitor the current across the holder.

It has been found that most consumers cannot detect color changes of less than 2 ∆E. Therefore, for the consumer to visually appreciate a tooth whitening product, the tooth must lighten in color by at least 2 ∆E.

From the foregoing description, one skilled in the art can ascertain the essential characteristics of this invention, and without departing from the spirit and scope thereof, can make various changes and modifications. Embodiments set forth by way of illustration are not intended as limitations on the variations possible in practicing the present invention.

Example 1

A series of gels was prepared using tris(hydroxymethyl) amino methane ("TRIS") (available from Spectrum Chemical Manufacturing Company, California), Ultrez-10 (available from Noveon, New Jersey), distilled water, and sodium chloride (available from Spectrum Chemical Manufacturing Company, California).

A predetermined amount of deionized, distilled water was placed in a beaker. The sodium chloride was added with stirring. After the sodium chloride was dissolved, the Ultrez-10, a polymeric thickener, was slowly added and stirring was continued until the Ultrez was dissolved. The TRIS was then slowly added and stirring was continued until a gel was formed. The resultant gel had a pH of approximately 7.98. Stirring was discontinued and the gel was allowed to set for one hour. Table 1 shows the composition of four gels which were prepared by the above-mentioned procedure.

Table 1

|  | Deionized, distilled water | Sodium chloride | Ultrez-10 | Tris |
|---|---|---|---|---|
| Control Gel | 98.60 | 0 | 1.16 | 0.21 |
| Gel 2A | 97.10 | 0.5 | 1.15 | 1.26 |
| Gel 2B | 91.30 | 0.6 | 1.09 | 7.11 |
| Gel 2F | 78.3 | 1.0 | 0.93 | 19.90 |

All weights in the above and following tables are in weight percent.

Example 2

The gels of Example 1 and commercially available Product A (Crest Whitestrips™ Dental Whitening System) were tested, using the above described test cell 110 and cow tooth slab 150, to determine their respective whitening abilities. As purchased, commercially available Product A comprises a plastic strip coated on one side thereof with a tooth whitening gel made from purified water, glycerin, hydrogen peroxide, Carbopol 956, sodium hydroxide, sodium acid pyrophosphate, and sodium stannate. The gel was carefully scraped from the plastic substrate and the gel so obtained was used in this Example 2. One gram of the gel ("Product A Gel") was used as collected. 0.1 gram of a 9% by weight aqueous sodium chloride solution was added to 0.9 gram of the gel to give a concentration of 0.9% by weight of sodium chloride based on the total weight of the gel and sodium chloride. The resulting sodium chloride-containing gel is referred to hereinafter as "Modified Product A Gel".

Each gel to be tested was placed on the upper surface of the cow tooth chip of the cow tooth slab. Test cell 110 was then placed over the gel to be tested so that the gel was also in contact with the lower surfaces of electrodes 120 and 122. Using power supply 180, various currents (milliamps, mA) were applied to each test gel for various time periods (minutes). Color intensities of each treated cow tooth were then measured, in three different locations, using the aforementioned Minolta Colorimeter. ΔE values were calculated for each of the three locations read by the colorimeter and the resulting ΔE values were averaged. The average ΔE values were then converted to tooth shades. The tooth shades are reported in Table 2.

Table 2

| Time (minutes) | Current (mA) | Control Gel | Gel 2A | Gel 2B | Product A | Modified Product A |
|---|---|---|---|---|---|---|
| 5 | 1 | 0.7 | 1.41 | 0.16 | 0.64 | 1.67 |
| 15 | 1 | 1.18 | 2.90 | 0.72 | 1.36 | 2.75 |
| 40 | 1 | 1.61 | 4.28 | 6.11 | 1.63 | 3.58 |
| 15 | 2 | 0.59 | 4.12 | 6.39 | 2.71 | 3.33 |
| 15 | 4 | 3.15 | 5.99 | 8.84 | 3.91 | 5.38 |
| 15 | 6 | ------- | 5.73 | 9.87 | 4.73 | 6.29 |

The data in Table 2 demonstrates that subjecting commercially available whitening compositions (i.e., Product A and Modified Product A in Table 2) to electrolytic decomposition in accordance with the teachings of the present invention reduces the time otherwise needed to whiten teeth with those products. The data also indicates that increasing the current further reduces the time otherwise needed to whiten teeth.

Example 3

Gel 2B of Example 1 was prepared and placed on cow tooth slab 150 in contact with cow tooth chip 140. Test cell 110 was placed over the cow tooth chip 140 which was covered by the gel. The gel to be tested was placed in contact with the electrodes of the test cell 110. A current of 2 mA was applied and Colorimeter readings were taken at the time intervals indicated in Table 3 below.

Product B (Rembrandt® Plus Whitening Gel) was applied to cow tooth chip 140 of cow tooth slab 150. No current was applied. Colorimeter readings were taken at 30 minutes and 60 minutes. ΔE values were calculated and are reported in Table 3.

Table 3

| Time (minutes) | Gel 2B | Product B |
|---|---|---|
| 15 | 5.16 | Not measured |
| 30 | 8.25 | 1.37 |
| 45 | 10.96 | Not measured |
| 60 | 10.73 | 2.68 |

The ΔE values reported in Table 3 indicate that when electrolysis is used for a gel containing sodium chloride (i.e, Gel 2B), better whitening results are obtained in a shorter time than those obtained with a commercially available product that does not contain sodium chloride (Product B) and does not use electrolysis.

Our investigations indicate that when the amount of electrolyte included in the tooth whitening composition is increased, less power is required to achieve comparable whitening results. In addition, we have found that in order to achieve the best whitening results with the oral device of FIG. 1, it is preferred that each positive electrode (and its "mating" negative electrode) be powered by its own separate power supply.

**Claims**

**1.** An oral device (20; 85) for cleaning teeth and placement on the teeth comprising a substrate material (50) and:

> a power source (35; 65) having a positive terminal (67) and a negative terminal (68),
> a first electrode (27) and a second electrode (28),

> wherein said first electrode (27) and said second electrode (28) are secured to said substrate material (50) and said first electrode (27) is connected to said positive terminal (67) of said power source (35; 65) and said second electrode (28) is connected to said negative terminal (68) of said power source (35; 65).

**2.** An oral device (20) of claim 1 further comprising:

> a conductive medium held in contact with the teeth and both electrodes (27, 28),
> wherein said first electrode (27) is not in contact with said second electrode (28) and said terminals of said power source (35) are connected to the electrodes (27, 28) by conductive leads (36, 37).

**3.** An oral device (20) of any preceding claim, wherein the oral device (20) comprises a tray (22).

**4.** An oral device (20) of claim 3, wherein said tray (22) comprises a front portion, a back portion and a trough portion (23), said first electrode (27) is joined to said front portion, said second electrode (28) is joined to said back portion.

**5.** An oral device (20) of claim 4, wherein said trough (23) contains said conductive medium placed therein.

**6.** An oral device (20) of claim 3 wherein said tray (22) is generally U-shaped and comprises:

> a floor portion (24) having sides which are joined to a pair of upstanding, spaced apart walls (25, 26), one of said walls constituting a front wall (25) and the other of said walls constituting a back wall (26), and each of said walls having an inwardly facing surface (25a, 26a);
> the inwardly facing surface (25a) of said front wall (25) including said first electrode (27); and
> the inwardly facing surface (26a) of said back wall (26) including said second electrode (28).

**7.** An oral device (20) of any of claims 2 to 6, wherein said conductive medium comprises a gelling agent and a conductive agent.

**Patentansprüche**

1.  Oralvorrichtung (20; 85) zum Reinigen von Zähnen und Plazieren auf den Zähnen, die ein Substratmaterial (50) und folgendes umfaßt:

    eine Stromquelle (35; 65) mit einem positiven Anschluß (67) und einem negativen Anschluß (68),
    eine erste Elektrode (27) und eine zweite Elektrode (28),

    wobei die erste Elektrode (27) und die zweite Elektrode (28) an dem Substratmaterial (50) befestigt sind und die erste Elektrode (27) mit dem positiven Anschluß (67) der Stromquelle (35; 65) verbunden ist und die zweite Elektrode (28) mit dem negativen Anschluß (68) der Stromquelle (35; 65) verbunden ist.

2.  Oralvorrichtung (20) nach Anspruch 1, die ferner folgendes umfaßt:

    ein leitfähiges Medium, welches mit den Zähnen und beiden Elektroden (27, 28) in Kontakt gehalten ist, wobei die erste Elektrode (27) nicht mit der zweiten Elektrode (28) in Kontakt ist und die Anschlüsse der Stromquelle (35) mit den Elektroden (27, 28) durch Leiter (36, 37) verbunden sind.

3.  Oralvorrichtung (20) nach einem der vorhergehenden Ansprüche, wobei die Oralvorrichtung (20) eine Aufnahme (22) umfaßt.

4.  Oralvorrichtung (20) nach Anspruch 3, bei der die Aufnahme (22) einen Vorderabschnitt, einen Hinterabschnitt und einen durchgängigen Abschnitt (23) umfaßt, wobei die erste Elektrode (27) mit dem Vorderabschnitt verbunden ist und die zweite Elektrode (28) mit dem Hinterabschnitt verbunden ist.

5.  Oralvorrichtung (20) nach Anspruch 4, bei der der durchgängige Abschnitt (23) das darin angeordnete leitfähige Medium enthält.

6.  Oralvorrichtung (20) nach Anspruch 3, bei der die Aufnahme (22) allgemein U-förmig ist und folgendes umfaßt:

    einen Bodenabschnitt (24) mit Seiten, die mit einem Paar von aufrechten voneinander beabstandeten Wänden (25, 26) verbunden sind, wobei eine der Wände eine Vorderwand (25) bildet und die andere der Wände eine Hinterwand (26) bildet, und eine jede der Wände eine nach innen gewandte Fläche (25a, 26a) hat;

    wobei die nach innen gewandte Fläche (25a) der Vorderwand (25) die erste Elektrode (27) umfaßt; und
    die nach innen gewandte Fläche (26a) der Hinterwand (26) die zweite Elektrode (28) umfaßt.

7.  Oralvorrichtung (20) nach einem der Ansprüche 2 bis 6, bei dem das leitfähige Medium ein Geliermittel und ein leitfähiges Mittel umfaßt.

**Revendications**

1.  Dispositif oral (20 ; 85) pour le nettoyage des dents et la mise en place sur les dents comprenant un matériau de substrat (50) et :

    une source de puissance (35 ; 65) comprenant une borne positive (67) et une borne négative (68),
    une première électrode (27) et une deuxième électrode (28),

    dans lequel ladite première électrode (27) et ladite deuxième électrode (28) sont fixées au dit matériau de substrat (50), ladite première électrode (27) est connectée à ladite borne positive (67) de ladite source de puissance (35 ; 65), et ladite deuxième électrode (28) est connectée à ladite borne négative (68) de ladite source de puissance (35 ; 65).

2.  Dispositif oral (20) selon la revendication 1 comprenant par ailleurs :

    un support conducteur maintenu en contact avec les dents et les deux électrodes (27, 28), dans lequel ladite première électrode (27) n'est pas en contact avec ladite deuxième électrode (28), et lesdites bornes de ladite source de puissance (35) sont connectées aux électrodes (27, 28) par des fils conducteurs (36, 37).

3. Dispositif oral (20) selon l'une quelconque des revendications précédentes, dans lequel le dispositif oral (20) comprend un porte empreinte (22).

4. Dispositif oral (20) selon la revendication 3, dans lequel ledit porte empreinte (22) comprend une portion avant, une portion arrière et une portion intermédiaire (23), ladite première électrode (27) est réunie à ladite portion avant, ladite deuxième électrode (28) est réunie à ladite portion arrière.

5. Dispositif oral (20) selon la revendication 4, dans lequel ladite portion intermédiaire (23) contient ledit support conducteur placé en elle.

6. Dispositif oral (20) selon la revendication 3, dans lequel ledit porte empreinte (22) a globalement une forme de U et comprend :

une portion de base (24) ayant des côtés qui sont réunis par une paire de parois (25, 26) verticales éloignées l'une de l'autre, l'une desdites parois constituant une paroi avant (25) et l'autre desdites parois constituant une paroi arrière (26), et chacune desdites parois ayant une surface dirigée vers l'intérieur (25a, 26a);
la surface dirigée vers l'intérieur (25a) de ladite paroi avant (25) comprenant ladite première électrode (27) ; et
la surface dirigée vers l'intérieur (26a) de ladite paroi arrière (26) comprenant ladite deuxième électrode (28).

7. Dispositif oral (20) selon l'une quelconque des revendications 2 à 6, dans lequel ledit support conducteur comprend un agent gélifiant et un agent conducteur.

FIG. 1

FIG. 2

FIG. 3

FIG. 4

# FIG. 5

# FIG. 6

## FIG. 7

## FIG. 8A

## FIG. 8B

## FIG. 9

## FIG. 10A

## FIG. 10B

# FIG. 11

FIG. 12

*122*

*110*

*160*

*118*

*120*

*119*

FIG. 13

*180*

(+)        (−)

*126*        *127*

*111*

*120*        *122*

X→

*118*        *119*

*150*

*130*

Y

*140*